# EUROPEAN PATENT SPECIFICATION

(11) **EP 1 519 008 B1**
(45) Date of publication and mention of the grant of the patent: **03.03.2010**
(21) Application number: 04077522.3
(22) Date of filing: 14.09.2004
(51) Int. Cl.: F01D 5/18

(54) **Internally cooled fluid directing component**
Innengekühltes strömungsleitendes Komponent
Composant à refroidissement interne conduisant un fluide

(30) Priority: 25.09.2003 US 671249
(43) Date of publication of application: 30.03.2005
(73) Proprietor: Siemens Energy, Inc., Orlando, FL 32826-2399 (US)
(72) Inventor: Liang, George, Palm City, FL 34990 (US)
(74) Representative: McGowan, Nigel George

(56) References cited:
- EP-A- 1 010 859
- US-A- 4 474 532
- US-A- 5 403 159
- US-A- 5 669 759
- US-B1- 6 257 830
- US-B2- 6 439 848
- US-B2- 6 595 750

## Description

### FIELD OF THE INVENTION

This invention relates generally to the field of internal to combustion engines and, more particularly, to a flow guide component that produces increased cooling effectiveness without producing reduced engine efficiency.

### BACKGROUND OF THE INVENTION

Combustion engines are machines that convert chemical energy stored in fuel into mechanical energy useful for generating electricity, producing thrust, or otherwise doing work. These engines typically include several cooperative sections that contribute in some way to the energy conversion process. In gas turbine engines, air discharged from a compressor section and fuel introduced from a fuel supply are mixed together and burned in a combustion section. The products of combustion are harnessed and directed through a turbine section, where they expand and turn a central rotor shaft. The rotor shaft may, in turn, be linked to devices such as an electric generator to produce electricity.

To increase efficiency, engines are typically operated near the operational limits of the engine components. For example, to maximize the amount of energy available for conversion into electricity, the products of combustion (also referred to as the working gas or working fluid) often exit the combustion section at high temperature. This elevated temperature generates a large amount of potential energy, but it also places a great deal of stress on the downstream fluid guide components, such as the blades and vanes of the turbine section.

In an effort to help components within the engine withstand these temperatures, a number of strategies have been developed. One strategy is to manufacture these components from advanced materials that can operate in high-temperature environments for extended periods. Another strategy includes protecting the components with special, heat-resistant coatings that lessen the effects of exposure to elevated temperatures. In still another strategy, the components may be cooled through a variety of methods. Each of these strategies has advantages and disadvantages, and the strategies may be combined to fit various situations and operating conditions.

In situations where turbine components are cooled, one cooling method involves delivering compressor-discharge air, or other relatively-cool fluid, to the exterior of the components. The cooling fluid may flow along the surface of the component, as in "film" cooling, or it may be guided to impinge upon the component surface. Cooling fluid may also be delivered to the interior of a component so that the component temperature may be reduced from the inside out.

Although cooling may be used to improve the high-temperature operation of blades and vanes, problems associated with this strategy limit its effectiveness in many situations. In situations where the cooling fluid is air provided by the compressor, extensive use of cooling may adversely affect engine performance by reducing the amount of air available for combustion and reducing power generating capacity of a given engine. Even in situations where cooling fluid is not provided by the compressor, it is difficult to ensure that all components are cooled sufficiently. Inadequate cooling can be troublesome, because in cases where portions of a component are not cooled sufficiently, the component may fail during operation.

While a variety of strategies have been developed to improve the high-temperature tolerance of turbine engine components, there are difficulties associated with these strategies. Additionally, as performance requirements increase, turbine components are subjected to even-more-extreme conditions. Accordingly, there remains a need in this field for strategies that allow turbine engine components to withstand extreme temperatures.

Flow guides for such components are described in US Patent No's US-A-5403159, US-B-6595750 and US-B-6257830. US Patent No US-A-4475432 discloses the features of the preamble of claim 1, and represents the closest prior art document.

### Summary of the Invention

The present invention is defined in the accompanying claims.

### Brief Description of the Drawing

Fig. 1 is a side plan view of an engine using the fluid guide component of the present invention;
Fig. 2 is a cross-section end view of the fluid guide component shown in Fig. 1, taken along cutting plane II-II' therein;
Fig. 3 is close up view of the image shown in Fig. 2
Fig. 4 is partial isometric view of the fluid guide component of the present invention; and
Fig. 5 is an alternate close up view of the image shown in Fig. 2, showing fluid flow.

### Detailed Description of the Invention

Reference is made to the Figures, generally, in which a fluid guide component 10 according to the present invention is shown. By way of overview, the guide component 10 includes elements that allow the component to provide enhanced temperature reduction without reducing engine performance. In one aspect of the invention, the fluid guide component 10 includes an interior cavity 18 having features that increase heat dissipation without relying on an increased volume of cooling fluid flow. In another aspect of the invention, the guide component 10 includes guided-flow regions 28,30 that strategically direct cooling fluid 20 through the component interior cavity 18, thereby ensuring key areas of the component 10 are cooled appropriately. In yet another aspect of the invention, the fluid guide component 10 includes structure that ensures effective cooling of an interior cavity turning zone 48 without producing overcooled regions within the component.

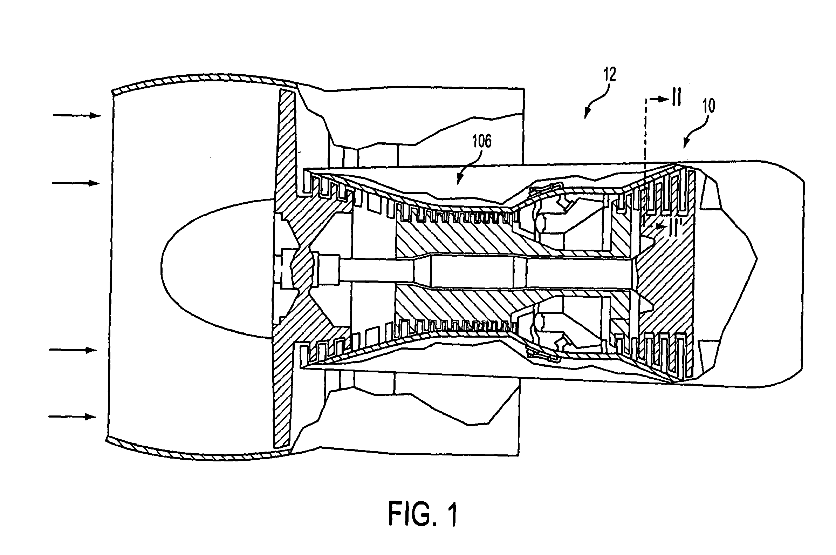

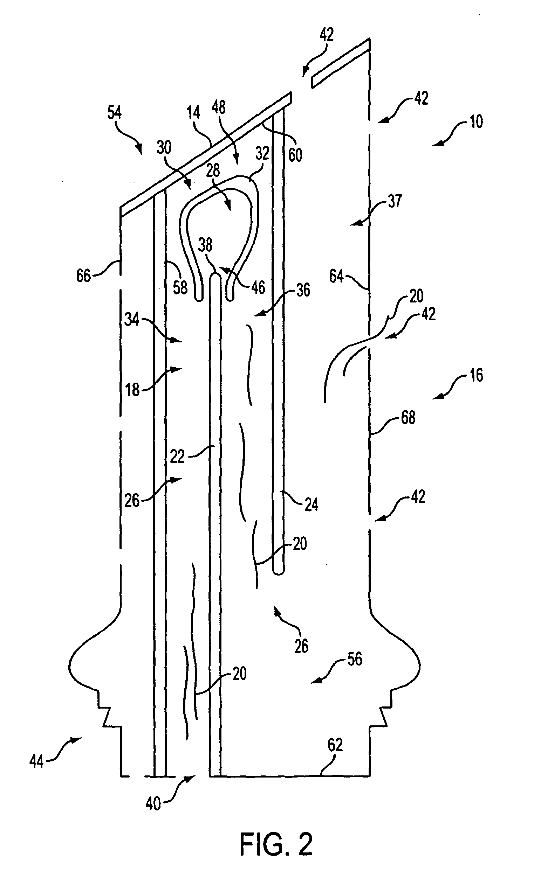

With particular reference to Figures 1 and 2, a first embodiment of a fluid guide component 10 of the present invention will now be discussed. In this embodiment, the component 10 is an internally-cooled turbine blade for use in a combustion engine 12. Accordingly, the component 10 is characterized by an attachment end 44 spaced apart from an opposite blade tip end 54 by an elongated body portion 16. The elongated body portion 16 has an airfoil-shaped cross section with a leading edge 66 spaced apart from an opposite trailing edge 68 by substantially-continuous, opposing sidewalls 70,72. It is noted that the guide component 10 need not be a blade; other embodiments, including stationary vanes or other internally-cooled, fluid-directing elements may also be used and are contemplated by this invention.

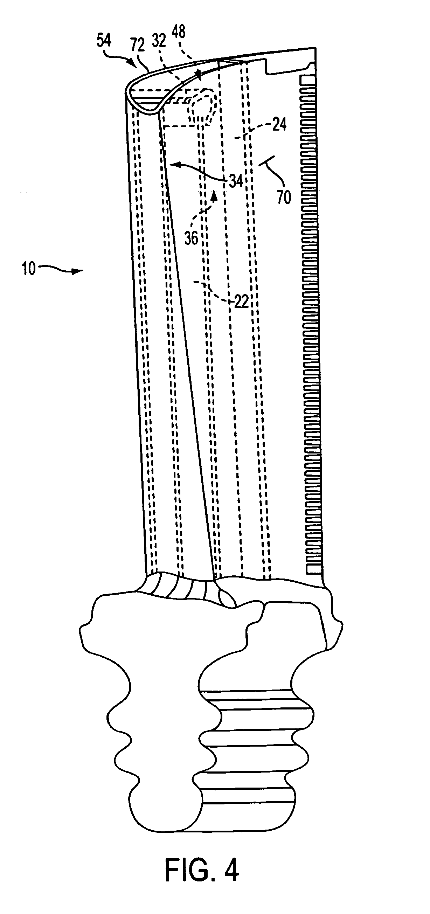

With continued reference to Figure 2, and with additional reference to Figure 4, the body portion 16 of the fluid guide component 10 has an interior cavity 18 with partition members 22,24 disposed therein. The partition members 22,24 extend between the body portion sidewalls 70,72 and cooperate with boundary surfaces 58,60,62,64 of the interior cavity 18 to define a cooling fluid flowpath 26 characterized by three channels 34,36,37. First and second turning zones 48,56 located within the interior cavity 18 near the tip end 54 and attachment end 44, respectively, each fluidly link an associated pair 34,36 and 36,37 of cooling channels. During operation, cooling fluid 20 is directed through the flowpath 26 to remove heat from the component 10. At least one cooling fluid inlet 40 allows cooling fluid 20 to enter the interior cavity 18, and cooling fluid outlets 42 allow the cooling fluid to exit. Although Figure 2 shows the attachment end 44 of the blade 10 as the cooling fluid inlet 40 location, cooling fluid 20 may enter the interior cavity 18 from other locations if desired.

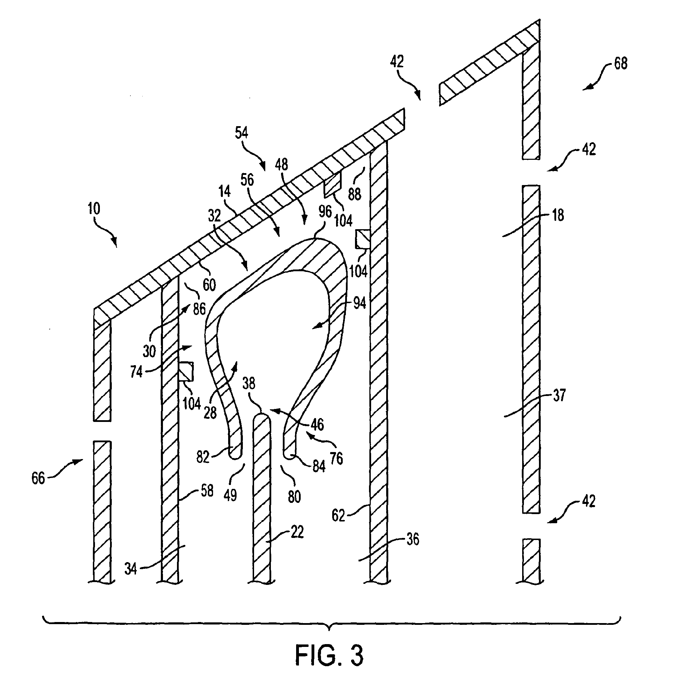

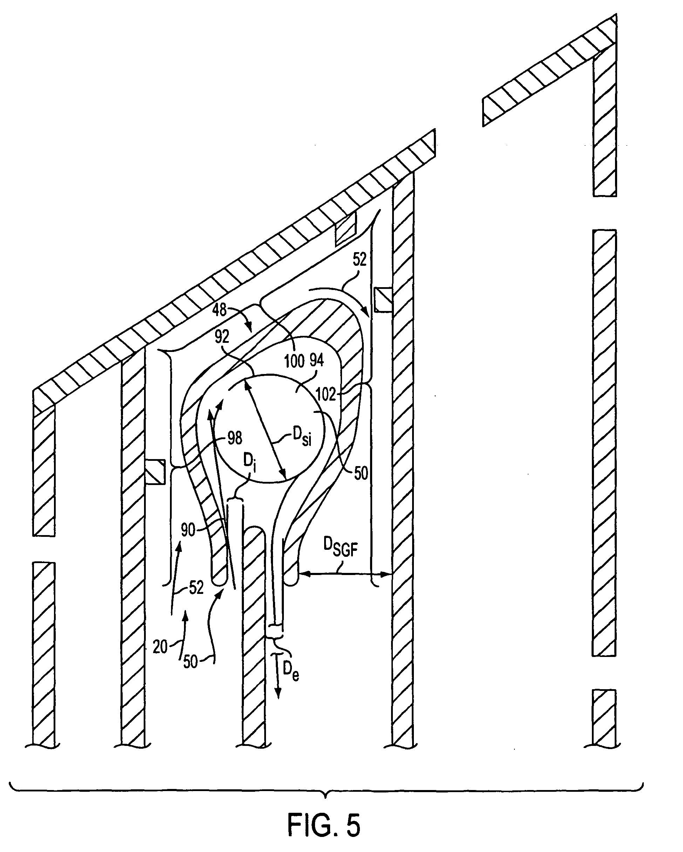

With reference to Figures 2 and 3, the first turning zone 48 will now be described. As noted above, the first and second channels 34,36 are fluidly linked by a first turning zone 48, and a contoured boundary member 32 divides the first turning zone into two guided-flow regions 28,30. These guided-flow regions 28,30 cooperatively ensure that the first turning zone 48 is cooled appropriately. More particularly, as seen with reference to Figures 3 and 5, each region 28,30 directs a portion 50,52 of cooling fluid through a key area of the first turning zone 48: a first portion 50 of cooling fluid 20 flows through the first guided-flow region 28 to reduce the temperature of the area adjacent the first partition member free end 38, and a second portion 52 of cooling fluid flows through the second guided-flow region 30 to reduce the temperature of the area between the contoured boundary member 32 and the cavity boundary surfaces 58,60,62 located at the tip end 54 of the component 10. As will be described more fully below, this dual guided-flow region arrangement advantageously ensures that the tip end 54 of the fluid guide component 10 is cooled as needed, without producing overcooled regions.

Now, with particular reference to Figures 3 and 4, a first embodiment of the contoured boundary member 32 will be described in detail. In this embodiment, the contoured boundary member 32 is an elongated component that extends between the body portion sidewalls 70,72. With continued reference to Figure 4, the contoured boundary member 32 is a substantially-tubular structure with a cross section that resembles a horseshoe, including a rounded head portion 74 and a tapered shoulder portion 76. The head portion 74 provides a swirl-inducing region 94 which has a substantially-circular cross section characterized by a defining dimension Dₛᵢ; the shoulder portion 76 defines a longitudinally-extending flowthrough passageway 46 characterized by a first lip 82 disposed within the first channel 34 and a second lip 84 disposed within the second channel 36.

As seen in Figures 3, 4 and 5, the first partition member 22 divides the flowthrough passageway 46 into an entrance region 49 and an exit region 80. The shoulder region first lip 82 and first partition member 22 are spaced apart by a distance Dᵢ, and the shoulder region second lip 84 is spaced apart from the first partition member by a distance of Dₑ. It is also noted that the first partition member free end 54 need not be centered within the flowthrough passage 46: the values of Dᵢ need not be equal Dₑ. In this embodiment, the ratio of Dᵢ to Dₑ is about two. The entrance region 49 provides a metering slot through which the first portion 50 of cooling fluid enters the head portion 74, and the exit region allows cooling fluid to travel out of the head region and into the second channel 36, downstream of the first turning zone 48. The entrance and exit regions 49,80, along with the swirl-inducing region 94 form the first guided-flow region 28. These three regions 49,80,94 are fluidly linked and, as will be described more fully below, cooperatively form a cyclone or vortex of cooling fluid 50 within the swirl-inducing region that advantageously cools the region adjacent the first partition member free end 38. It is noted that the vortex flow pattern produced in the swirl-inducing region 94 increases the heat dissipation properties for the first portion 50 of cooling fluid passing adjacent the first partition member free end 38.

With continued reference to Figure 3, and with additional reference to Figures 4 and 5, as the first the first lip 82 and first partition free end 38 cooperatively direct the first portion 50 of cooling fluid along a path which is substantially-tangential to the vortex maintained by the contoured boundaries of the swirl-inducing region 94. The interaction of fluid passing leaving the fluid entrance region 49 and entering the swirl-inducing region 94 creates a jet and contributes to the vortex flow established in the swirl-inducing region. Although the dimensions Dₛᵢ and Dᵢ may be scaled to accommodate fluid guide components 10 of various sizes, it is preferable that the ratio of Dₛᵢ to Dₗ be within the range of about 10 to about 15. It is noted that while described as resembling a horseshoe, the contoured boundary member 32 may have a variety of cross-section profiles, including substantially C-shaped or U-shaped; essentially any cross section which forms a vortex or induces swirled flow within the first guided-flow region effective to reduce the temperature of the area adjacent the first partition member free end 38 would suffice and is contemplated by the present invention.

The second guided-flow region 30 will now be described in detail. As seen with in Figures 3 and 5, the second guided-flow region 30 extends between the outer surface 96 of the contoured boundary member 32 and the first, second, and third boundary surfaces 58,60,62 of the interior cavity 18. The relative spacing between the boundary surfaces 58,60,62 and the adjacent portion of the contoured boundary member outer surface 96 varies with position along the second guided-flow region 30. The second guided-flow region 30 comprises a first leg 98, a second leg 100, and a third leg 102; the legs are in fluid communication.

With cooperative reference to Figures 3 and 5, the first leg or section 98 spans flow-wise between the contoured boundary member first lip 82 and a first cavity tip end corner 86. The second leg or section 100 spans flow-wise between the first cavity tip end corner 86 and a second cavity tip end comer 88. The third leg or section 102 spans flow-wise between the second cavity tip end corner 88 and the contoured boundary member second lip 84. As noted above, The distance D_{sgf} between the contoured boundary member outer surface 96 and associated cavity boundary surface 58,60,62 varies with position along the second guided-flow region 30 and is strategically selected to impart desired flow characteristics to the second portion of cooling fluid 52 at key locations of the component 10. For example, the second guided-flow region 30 is relatively-narrow near the cavity tip end corners 86,88, while remaining relatively broad near the first lip 82 and second lip 84.

With this arrangement, the second portion of cooling fluid 52 accelerates as it travels along the first leg 98 toward the first cavity tip corner 86, changes direction and continues accelerating along the second leg 100 toward the second cavity tip corner 88, changes direction once again and continues with decreasing velocity along the third leg 102 to head toward the second channel 36. In keeping with various aspects of the present invention, the second portion of cooling fluid 52 provides impingement cooling of the cavity tip corners 86,88, as well as internal cooling of tip wall 14. It is noted that the acceleration and directional changes produces along this second guided-flow region 30 enhance the heat dissipation capabilities of the second portion of cooling fluid. It is also noted that turbulence-increasing structures 104, often referred to as "trip strips" or turbulators, may be used to further augment the heat transfer properties of cooling fluid if desired.

During operation of an engine 12 in which the fluid guide component of the present invention is installed, cooling fluid 20 travels from a cooling fluid source, such as a compressor 106 (shown in Figure 1), pump or other suitable source, and enters the component interior cavity 18 via at least one cavity inlet 40. The cooling fluid 18 enters the first channel 34 and begins to travel along the cooling fluid flowpath 46 described above. With continued operation, cooling fluid 20 travelling within the first channel 34 enters the first turning zone 48 and encounters the contoured boundary member first lip 82, which splits the cooling fluid 20 into a first portion 50 and a second portion 52.

The behavior, path, and purpose of each portion 50,52 of cooling fluid is different and strategically selected to provide appropriate cooling to the guided-flow regions 28,30. With reference to Figures 3 and 5, the first portion 50 of cooling fluid travels into the first guided-flow region 28, and the second portion travels into the second guided-flow region 30. As noted above, the first guided-flow region 28 cools the region adjacent the first partition member free end 38, while the second guided-flow region 30 cools the cavity tip corners 86,88 and the tip wall 14. Additionally, the exit region 80 of the first guided-flow path advantageously cooperates with the third leg 102 of the second guided-flow path 30 to ensure that flow separation tendencies are reduced as the first and second portions 50,52 of cooling fluid rejoin when leaving the first turning zone 48 to enter the second channel 36 and continue through the downstream remainder of the flowpath 26. After travelling through the cooling fluid flowpath 26, the cooling fluid 20 exits the component cavity 18 through a cavity outlet 42. With this arrangement, cooling fluid 20 travelling through within the internal cavity strategically cools the first turning zone 48 without an increased amount of cooling fluid volume or producing overcooled locations.

It is noted that the volume V₁ of the first portion 50 of cooling fluid flowing through the first guided-flow region 28 and the volume V₂ of the second portion 52 of cooling fluid flowing through the second guided-flow region 30 need not be equal. One particularly-effective ratio of V₂ to V₁ is within the range of about one to about four; that is, where volumetric flow in the second guided flow region 30 is up to about four times as much as the volumetric flow in the first guided flow region 28. It is also noted the cross sectional areas of the various regions have particularly-effective relationships in the present embodiment. For example, the ratio of cross-sectional area at the first cavity tip end corner 86 to the cross-sectional area at the beginning of the first guided-flow region 30 is within the range of about 0.65 to about 0.45. The ratio of cross-sectional area at the second cavity tip end corner 88 to the cross-sectional area at the end of the first guided-flow region 30 is within the range of about 0.65 to about 0.45. The ratio of cross-sectional area within the second guided flow region second leg 100 to the cross-sectional area at the first cavity tip end corner 86 is within the range of about 0.65 to about 0.80.

It is to be understood that while certain forms of the invention have been illustrated and described, it is not to be limited to the specific forms or arrangement of parts herein described and shown. It will be apparent to those skilled in the art that various, including modifications, rearrangements and substitutions, may be made without departing from the scope of this invention and the invention is not to be considered limited to what is shown in the drawings and described in the specification. The scope if the invention is defined by the claims appended hereto.

## Claims

1. An internally-cooled fluid directing component (10) comprising:
an elongated body member (16) having a first end (44) and a second end (54);
an interior cavity (18) disposed within said body member (16), said interior cavity (18) having a cooling fluid inlet (40) and a cooling fluid outlet (42);
a partition member (22) disposed within said interior cavity (18) and positioned to divide said interior cavity (18) into a first channel (34) and a second channel (36);
a turning zone (48) disposed within the interior cavity (18) and fluidly linking said first and second channels (34, 36);
at least one boundary member (32) disposed within said turning zone (48), said at least one boundary member (32) dividing said turning zone (48) into a first guided-flow region (28) and a second guided-flow region (30);
wherein said first channel (34), said turning zone (48), and said second channel (36) cooperatively form a flowthrough path adapted to transmit cooling fluid between said cooling fluid inlet (40) and said cooling fluid outlet (42),
whereby said first and second guided-flow regions (28, 30) are adapted to direct a first portion of cooling fluid (50) through said first guided-flow region (28) and a second portion of cooling fluid (52) through said second guided-flow region (30), respectively, thereby allowing strategic cooling of said turning zone (48), wherein said first guided-flow region (28) is proximate a first end (38) of said partition member (22) and said second guided-flow region (30) is proximate a tip wall (54) of said interior cavity (18), wherein said boundary member (32) is contoured to substantially surround said first guided-flow region (28), **characterised in that** said first guided-flow region (28) includes a swirl-inducing region (94) defined by said contoured boundary member (32), wherein said swirl-inducing region (94) is fluidly connected to said first channel (34) by an entrance region (49) and to said second channel (36) by an exit region (80), said entrance region (49) and said exit region (80) and said swirl-inducing region (94) being sized and shaped to cooperatively direct said first portion of cooling fluid (50) along a vortex-shaped flowpath.

2. The internally-cooled fluid directing component of Claim 1, wherein said entrance region (49) and said exit region (80) are spaced apart by said partition member (22).

3. The internally-cooled fluid directing component of Claim 1, wherein said first guided-flow region (28) is adapted to flow fluid at a first flow rate and said second guided-flow region (30) is adapted to flow fluid at a second flow rate, wherein the ratio of said first flow rate to said second flow rate is within the range of about 1 to about 4.

4. The internally-cooled fluid directing component of Claim 1, wherein said entrance region (49) has a characteristic first distance, and wherein said swirl-inducing region (94) has a characteristic second distance, and wherein the ratio of said second distance to said first distance is within the range of about 10 to about 15.

5. The internally-cooled fluid directing component of Claim 1, wherein said second guided-flow region (30) is disposed between said boundary member (32) and said tip wall (54) of said interior cavity (18).

6. The internally-cooled fluid directing component of Claim 1, wherein said second guided-flow region (30) includes at least one tapered region (98) adapted to provide accelerated flow adjacent a corner (86) of said interior cavity (18).

7. The internally-cooled fluid directing component of Claim 6, wherein said second guided-flow region (30) includes turbulence increasing elements (104).

8. The internally-cooled fluid directing component of Claim 1, wherein said body member (16) has an airfoil-shaped cross section including a leading edge (66) spaced apart from a trailing edge (68) by a first sidewall (70) and an opposite second sidewall (72).

9. The internally-cooled fluid directing component of Claim 1, wherein said boundary member (32) extends flow-wise within said turning zone (48).

## Patentansprüche

1. Innengekühlte strömungsleitende Komponente (10), die folgendes umfasst:
ein langgestrecktes Körperelement (16), das ein erstes Ende (44) und ein zweites Ende (54) besitzt;
einen inneren Hohlraum (18), der innerhalb des besagten Körperelements (16) angeordnet ist, wobei der besagte innere Hohlraum (18) einen Kühlflüssigkeitseinlass (40) und einen Kühlflüssigkeitsauslass (42) besitzt;
ein Teilungselement (22), das innerhalb des besagten inneren Hohlraums (18) angeordnet ist und derart positioniert ist, dass es den besagten inneren Hohlraum (18) in einen ersten Kanal (34) und einen zweiten Kanal (36) teilt;
eine Umlenkzone (48), die innerhalb des besagten inneren Hohlraums (18) angeordnet ist und eine Fluidverbindung zwischen dem besagten ersten und zweiten Kanal (34, 36) herstellt;
mindestens ein Abgrenzungselement (32), das innerhalb der besagten Umlenkzone (48) angeordnet ist, wobei das besagte mindestens eine Abgrenzungselement (32) die besagte Umlenkzone (48) in einen ersten strömungsleitenden Bereich (28) und einen zweiten strömungsleitenden Bereich (30) teilt;
wobei der besagte erste Kanal (34), die besagte Umlenkzone (48) und der besagte zweite Kanal (36) zusammenwirkend einen Durchflusskanal bilden, der dafür geeignet ist, Kühlflüssigkeit zwischen dem besagten Kühlflüssigkeitseinlass (40) und dem besagten Kühlflüssigkeitsauslass (42) zu transportieren,
wobei die besagten ersten und zweiten strömungsleitenden Bereiche (28, 30) dafür ausgelegt sind, einen ersten Teil der Kühlflüssikeit (50) durch den ersten strömungsleitenden Bereich (28) bzw. einen zweiten Teil der Kühlflüssigkeit (52) durch den besagten zweiten strömungsleitenden Bereich (30) zu leiten und dadurch die strategische Kühlung der besagten Umlenkzone (48) zu ermöglichen, wobei der besagte erste strömungsleitende Bereich (28) in der Nähe eines ersten Endes (38) des besagten Teilungselements (22) liegt und der besagte zweite strömungsleitende Teil (30) in der Nähe einer Wand der Blattspitze (54) des besagten inneren Hohlraums (18) liegt, wobei das besagte Abgrenzungselement (32) derart geformt ist, dass es im Wesentlichen den besagten ersten strömungsleitenden Bereich (28) umgibt, **dadurch gekennzeichnet, dass** der besagte erste strömungsleitende Bereich (28) einen wirbelerzeugenden Bereich (94) beinhaltet, der durch das besagte geformte Abgrenzungselement (32) definiert ist, wobei der besagte wirbelerzeugende Bereich (94) mit dem besagten ersten Kanal (34) über einen Eintrittsbereich (49) und mit dem besagten zweiten Kanal (36) über einen Austrittsbereich (80) in Fluidverbindung steht, wobei der besagte Eintrittsbereich (49) und der besagte Austrittsbereich (80) und der besagte wirbelerzeugende Bereich (94) derart bemessen und geformt sind, dass sie zusammenwirkend den besagten ersten Teil der Kühlflüssigkeit (50) entlang einem spiralförmigen Strömungsweg leiten.

2. Innengekühlte strömungsleitende Komponente gemäß Anspruch 1, wobei der besagte Eintrittsbereich (49) und der besagte Austrittsbereich (80) durch das besagte Teilungselement (22) voneinander getrennt sind.

3. Innengekühlte strömungsleitende Komponente gemäß Anspruch 1, wobei der besagte erste strömungsleitende Bereich (28) dafür ausgelegt ist, Flüssigkeit mit einer ersten Strömungsgeschwindigkeit fließen zu lassen, und der besagte zweite strömungsleitende Bereich (30) dafür ausgelegt ist, Flüssigkeit mit einer zweiten Strömungsgeschwindigkeit fließen zu lassen, wobei das Verhältnis der besagten ersten Strömungsgeschwindigkeit zu der besagten zweiten Strömungsgeschwindigkeit im Bereich von ungefähr 1 zu ungefähr 4 liegt.

4. Innengekühlte strömungsleitende Komponente gemäß Anspruch 1, wobei der besagte Eintrittsbereich (49) eine kennzeichnende erste Entfernung aufweist und wobei der besagte wirbelerzeugende Bereich (94) eine kennzeichnende zweite Entfernung aufweist, und wobei das Verhältnis der besagten zweiten Entfernung zu der besagten ersten Entfernung im Bereich von ungefähr 10 zu ungefähr 15 liegt.

5. Innengekühlte strömungsleitende Komponente gemäß Anspruch 1, wobei der besagte zweite strömungsleitende Bereich (30) zwischen dem besagten Abgrenzungselement (32) und der besagten Wand der Blattspitze (54) des besagten inneren Hohlraums (18) angeordnet ist.

6. Innengekühlte strömungsleitende Komponente gemäß Anspruch 1, wobei der besagte zweite strömungsleitende Bereich (30) mindestens einen konisch zulaufenden Bereich (98) beinhaltet, der dafür ausgelegt ist, angrenzend an eine Ecke (86) des besagten inneren Hohlraums (18) eine beschleunigte Strömung bereitzustellen.

7. Innengekühlte strömungsleitende Komponente gemäß Anspruch 6, wobei der besagte zweite strömungsleitende Bereich (30) turbulenzverstärkende Elemente (104) beinhaltet.

8. Innengekühlte strömungsleitende Komponente gemäß Anspruch 1, wobei das besagte Körperelement (16) einen flügelförmigen Querschnitt aufweist, welcher eine Vorderkante (66) umfasst, die von einer Hinterkante (68) durch eine erste Seitenwand (70) und eine gegenüberliegende zweite Seitenwand (72) beabstandet ist.

9. Innengekühlte strömungsleitende Komponente gemäß Anspruch 1, wobei das besagte Abgrenzungselement (32) sich in Strömungsrichtung innerhalb der besagten Umlenkzone (48) erstreckt.

## Revendications

1. Composant de guidage de fluide à refroidissement interne (10) comprenant :
un élément formant corps allongé (16) comportant une première extrémité (44) et une seconde extrémité (54) ;
une cavité intérieure (18) disposée à l'intérieur dudit élément formant corps (16), ladite cavité intérieure (18) comportant une entrée de fluide de refroidissement (40) et une sortie de fluide de refroidissement (42) ;
un élément séparateur (22) disposé à l'intérieur de ladite cavité intérieure (18) et positionné pour diviser ladite cavité intérieure (18) en un premier canal (34) et en un second canal (36) ;
une zone de retournement (48) disposée à l'intérieur de ladite cavité intérieure (18) et reliant fluidiquement lesdits premier et second canaux (34, 36) ;
au moins un élément limitant (32) disposé à l'intérieur de ladite zone de retournement (48), ledit au moins un élément limitant (32) divisant ladite zone de retournement (48) en une première région à flux guidé (28) et en une seconde région à flux guidé (30) ;
étant entendu que ledit premier canal (34), ladite zone de retournement (48) et ledit second canal (36) forment conjointement une voie de passage adaptée pour faire circuler le fluide de refroidissement entre ladite entrée de fluide de refroidissement (40) et ladite sortie de fluide de refroidissement (42) ;
de telle sorte que lesdites première et seconde régions à flux guidé (28, 30) sont adaptées pour diriger, respectivement, une première partie du fluide de refroidissement (50) à travers ladite première région à flux guidé (28) et une seconde partie du fluide de refroidissement (52) à travers ladite seconde région à flux guidé (30), ce qui autorise un refroidissement stratégique de ladite zone de retournement (48), étant entendu que ladite première région à flux guidé (28) se trouve à proximité d'une première extrémité (38) dudit élément séparateur (22) et que ladite seconde région à flux guidé (30) se trouve à proximité d'une paroi terminale (54) de ladite cavité intérieure (18), étant entendu que ledit élément limitant (32) est profilé pour entourer sensiblement ladite première région à flux guidé (28), **caractérisé en ce que** ladite première région à flux guidé (28) comprend une région inductrice de turbulences (94) définie par ledit élément limitant profilé (32), étant entendu que ladite région inductrice de turbulences (94) est reliée fluidiquement audit premier canal (34) par une région d'entrée (49) et audit second canal (36) par une région de sortie (80), ladite région d'entrée (49) et ladite région de sortie (80) et ladite région inductrice de turbulences (94) étant dimensionnées et conformées pour diriger conjointement ladite première partie du fluide de refroidissement (50) suivant un trajet d'écoulement en forme de vortex.

2. Composant de guidage de fluide à refroidissement interne selon la revendication 1, dans lequel ladite région d'entrée (49) et ladite région de sortie (80) sont séparées l'une de l'autre par ledit élément séparateur (22).

3. Composant de guidage de fluide à refroidissement interne selon la revendication 1, dans lequel ladite première région à flux guidé (28) est adaptée pour faire s'écouler un fluide à une première vitesse d'écoulement et ladite seconde région à flux guidé (30) est adaptée pour faire s'écouler un fluide à une seconde vitesse d'écoulement, étant entendu que le rapport de ladite première vitesse d'écoulement à ladite seconde vitesse d'écoulement se situe dans la fourchette allant d'environ 1 à environ 4.

4. Composant de guidage de fluide à refroidissement interne selon la revendication 1, dans lequel ladite région d'entrée (49) est à une première distance caractéristique et dans lequel ladite région inductrice de turbulences (94) est à une seconde distance caractéristique, étant entendu que le rapport de ladite seconde distance à ladite première distance se situe dans la fourchette allant d'environ 10 à environ 15.

5. Composant de guidage de fluide à refroidissement interne selon la revendication 1, dans lequel ladite seconde région à flux guidé (30) est disposée entre ledit élément limitant (32) et ladite paroi terminale (54) de ladite cavité intérieure (18).

6. Composant de guidage de fluide à refroidissement interne selon la revendication 1, dans lequel ladite seconde région à flux guidé (30) comprend au moins une région conique (98) adaptée pour fournir un écoulement accéléré adjacent à un angle (86) de ladite cavité intérieure (18).

7. Composant de guidage de fluide à refroidissement interne selon la revendication 6, dans lequel ladite seconde région à flux guidé (30) comprend des éléments amplificateurs de turbulences (104).

8. Composant de guidage de fluide à refroidissement interne selon la revendication 1, dans lequel ledit élément formant corps (16) a une section à profil aérodynamique comprenant un bord d'attaque (66) séparé d'un bord de fuite (68) par une première paroi latérale (70) et par une seconde paroi latérale opposée (72).

9. Composant de guidage de fluide à refroidissement interne selon la revendication 1, dans lequel ledit élément limitant (32) s'étend suivant l'écoulement à l'intérieur de ladite zone de retournement (48).
